**Europäisches Patentamt**

**European Patent Office**

**Office européen des brevets**

(19)

(11) Veröffentlichungsnummer: **0 359 247**

**A2**

(12) # EUROPÄISCHE PATENTANMELDUNG

(21) Anmeldenummer: **89116986.4**

(22) Anmeldetag: **13.09.89**

(51) Int. Cl.5: **G01D 5/26**

(30) Priorität: **16.09.88 AT 2273/88**

(43) Veröffentlichungstag der Anmeldung:
**21.03.90 Patentblatt 90/12**

(84) Benannte Vertragsstaaten:
**AT BE CH DE ES FR GB GR IT LI LU NL SE**

(71) Anmelder: **LITTON PRECISION PRODUCTS INTERNATIONAL GMBH**
**Feringastrasse 14**
**D-8043 Unterföhring(DE)**

(72) Erfinder: **Geroldinger, Markus**
**Vielsassing 9**
**A-4780 Schärding(AT)**

(74) Vertreter: **Patentanwälte TER MEER - MÜLLER - STEINMEISTER**
**Mauerkircherstrasse 45**
**D-8000 München 80(DE)**

(54) **Drehgeber.**

(57) Bei dem erfindungsgemäßen Drehgeber wird der mit einem Gehäuse (12) verbundene Stator (13) durch zwei miteinander vorzugsweise durch Verschrauben verbundene Lagerflansche (6.1, 6.2) gebildet, die so gestaltet sind, daß im verbundenen Zustand der beiden Lagerflansche ein die Teilscheibe aufnehmender Ringraum frei bleibt. Vorzugsweise ist auch die auf die Teilscheibe (1) ausgerichtete elektrooptische Abtasteinheit (15) in entsprechenden Aussparungen der beiden Lagerflansche eingebaut. Durch die Umschließung der Teilscheibe und der Abtasteinheit durch die Lagerflansche wird einerseits eine sehr geringe Bauhöhe und andererseits eine hohe Abstandskonstanz zwischen der Teilscheibe (1) und der Abtastplatte (2) erreicht, so daß auf eine dem Lichtgeber (5) der Abtasteinheit (15) zugeordnete Kondensorlinse verzichtet werden kann. Um eine weitere Stabilität und Abstandskonstanz zu gewährleisten und einen einfachen Aufbau zu ermöglichen, ist vorgesehen, daß die Innenringe (11a) von die Welle (7) abstützenden Wälzlagern (11) gegeneinander im Sinne einer Vergrößerung des gegenseitigen Abstands vorgespannt und in diesem Zustand mit der Welle (7) verklebt sind. Die Außenringe (11b) der Wälzlaager (11) sind ebenfalls vorzugsweise durch Kleben fixiert.

FIG. 1

# Drehgeber

Die Erfindung betrifft einen Drehgeber mit einem Stator, der mit einem Gehäuse verbunden ist und in dem über zwei Wälzlager eine Welle gelagert ist, an der eine Teilscheibe befestigt ist, welcher eine am Stator fixierte elektrooptische Abtasteinheit zugeordnet ist.

Zum Abtasten der Meßteilung der Teilscheibe bei Drehgebern der erwähnten Art werden üblicherweise Leuchtdiode oder Glühfadenlampen verwendet. Die Einhaltung eines bestimmten Abstands zwischen einer auf der Seite der Leuchtdiode, Glühfadenlampe angeordneten Abtast- oder Strichplatte und der Teilscheibe ist für die Meßgenauigkeit von erheblicher Bedeutung. Leuchtdioden und Glühfadenlampen bilden bekanntlich einen Lichtkegel. Um Meßfehler zu vermeiden, muß daher ein möglichst konstant bleibender Abstand zwischen der Abtastplatte und der Teilscheibe eingehalten werden. Der Drehgeber ist weiterhin mechanisch so aufgebaut, daß eine Lagerwelle in einem Lagerflansch vorzugsweise über Rillenkugellager aufgenommen ist. Ein Ende der Welle steht über den Lagerflansch nach außen für den Anbau zur Verfügung und am nach innen stehenden Ende der Welle ist die Teilscheibe angeordnet. Eine das ganze System einschließlich einer Leiterplatte schützende Abdeckhaube ist am Lagerflansch befestigt.

Bei den bekannten Konstruktionen solcher Drehgeber mit einem auch als Stator bezeichneten Lagerflansch kann unter anderem aufgrund der Lagerspiele der Welle die Bedingung des konstanten Abstands zwischen Abtastplatte und Teilscheibe nicht erfüllt werden. Zur Vermeidung von Meßfehlern ist es daher bekannt, den Leuchtdioden oder Glühfadenlampen eine Kondensorlinse nachzuschalten, die eine entsprechende Verringerung des Winkels des Lichtkegels bewirkt, da nur bei achsparallelen Lichtstrahlen eine axiale Verschiebung der Teilscheibe gegenüber der Abtastplatte hinsichtlich der Abtastgenauigkeit unerheblich ist. Mit der Verwendung einer Kondensorlinse wird allerdings der Aufwand vergrößert.

Der Erfindung liegt damit die Aufgabe zugrunde, die aufgezeigten Mängel zu vermeiden und einen Drehgeber der eingangs erwähnten Art so zu verbessern, daß mit einfachen konstruktiven Mitteln bei geringer Bauhöhe ein konstanter Abstand zwischen der Abtastplatte und der Teilscheibe gewährleistet werden kann.

Erfindungsgemäß wird diese technische Aufgabe bei einem Drehgeber mit einem Stator, der mit einem umgebenden Gehäuse verbunden ist und in dem über zwei Wälzlager eine Welle gelagert ist, an der eine Teilscheibe befestigt ist, welcher eine am Stator fixierte elektrooptische Abtasteinheit zugeordnet ist, erfindungsgemäß dadurch gelöst, daß der Stator durch zwei miteinander verbundene Lagerflansche gebildet ist, die so gestaltet sind, daß im verbundenen Zustand der Lagerflansche ein die Teilscheibe aufnehmender Ringraum freibleibt und daß der Außenring des einen Wälzlagers an einem Lagerflansch und der Außenring des anderen Wälzlagers am anderen Lagerflansch fixiert ist.

Vorzugsweise sind die Innenringe der als Schulterkugellager ausgebildeten Wälzlager auf der Welle, die eine Hohl- oder Massivwelle sein kann, durch Kleben fixiert und die Lagerflansche sind zur Bildung des Stators miteinander verschraubt. Die Innenringe der Wälzlager sind axial vorzugsweise im Sinne einer Vergrößerung des gegenseitigen Abstands vorgespannt, beispielsweise durch ein zwischen den Innenringen angeordnetes druckelastisches Element, insbesondere eine Druckfeder. Die zur Bildung des Stators miteinander verschraubten Lagerflansche sind vorzugsweise über eine Doppelmembrankupplung mit dem Gehäuse verbunden. Auf diese Weise können Fluchtungsfehler zwischen dem Gehäuse und der Welle einfach ausgeglichen werden, wobei dieser Fehler durch die Verformung der Membran bzw. besser noch durch die Änderung der gegenseitigen Lage der beiden Membranen bei einer Doppelmembrankupplung aufgenommen werden. Im Falle eines Montage bzw. Fluchtungsfehlers der Welle zum Gehäuse, das an einem entsprechenden Maschinenteil gehalten sein kann, wirken daher nur vernachlässigbar kleine Kräfte auf die Lager und die Welle ein, so daß es zu keinem elastischen Verbiegen der Welle kommt, die zu einer Veränderung der gegenseitigen Lage der Abtastplatte zur Teilscheibe führen würde.

Dadurch, daß die Teilscheibe und die Abtastplatte bzw. die gesamte Abtasteinheit in Inneren der beiden Lagerflansche liegen, wird die niedrigste Bauhöhe erreicht, die überhaupt möglich ist. Dies ist insbesondere für Hohlwellen-Drehgeber besonders günstig.

Bei der Montage wird so vorgegangen, daß zunächst die bei den Außenringe der Wälzlager, z. B. Kugellager, in den Lagerflanschen beispielsweise durch Verkleben fixiert werden. Nach dem Verschrauben der beiden Lagerflansche werden die unter axialer, definierter Vorspannung durch das elastische Element stehenden Innenringe der beiden Wälzlager mit der Lagerwelle verklebt, wobei z. B. ein anaerob härtender Kleber verwendet wird. Dadurch ist sichergestellt, daß die Spielfreiheit der Lagerwelle bzw. der Wälzlager erhalten bleibt.

Eine besonders günstige Lagerungsgeometrie ergibt sich auch dadurch, daß die Wälzlager an der äußerst möglichen Position des Stators angebracht werden können, wobei sich trotzdem ein kompakter Aufbau des Drehgebers ergibt. Dies wirkt sich positiv auf die Lebensdauer der Wälzlager aus und die zulässige Stützlast, also die Stabilität des Drehgebers insgesamt, ist deutlich erhöht.

Die Bohrungen der beiden Lagerflansche zur Aufnahme der Außenringe der Wälzlager können gleiche Durchmesser aufweisen, wodurch sich eine weitere Vereinfachung bei der Herstellung der Einzelteile und beim Zusammenbau derselben zu dem erfindungsgemäßen Drehgeber ergeben. Die erfindungsgemäße Konstruktion kann sowohl für Vollwellendrehgeber als auch für Hohlwellendrehgeber Verwendung finden.

Ein Ausführungsbeispiel der Erfindung wird nachfolgend anhand der Zeichnung näher erläutert. Es zeigen:

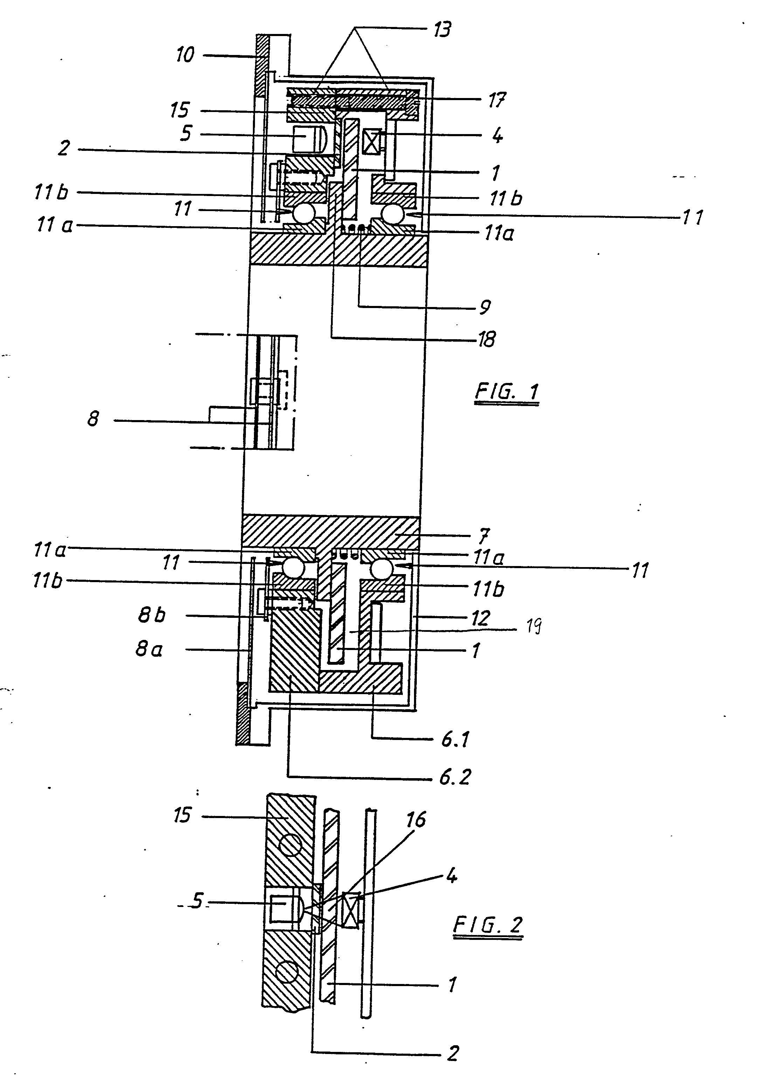

Fig. 1 einen Querschnitt durch einen Drehgeber mit erfindungsgemäßen Merkmalen, und

Fig. 2 einen Teilschnitt durch die Abtasteinheit des Drehgebers in vergrößertem Maßstab.

Der dargestellte Drehgeber weist eine Doppelmembrankupplung 8 auf zum Ausgleich von unvermeidbaren Fluchtungsfehlern einer nicht dargestellten Antriebswelle eines Fremdantriebs zur Lagerwelle 7 bzw. zu zwei Lagerflanschen 6.1 und 6.2, die im verschraubten Zustand einen Stator 13 bilden. Im dargestellten Fall ist eine Membran 8b mit dem Stator 13 und die andere Membran 8a mit einem Befestigungsring 10, der Teil eines Gehäuses 12 ist, verschraubt. Der Befestigungsring 10 dient gleichzeitig als Zentrierring und Befestigungsflansch für den an der Montagefläche des Fremdantriebs schwimmend aufzuhängenden Drehgeber.

In den beiden Lagerflanschen 6.1 und 6.2, dem Stator 13, ist die Lagerwelle 7 mit Hilfe von zwei Wälzlagern 11 drehbar gelagert. An einem radial abstehenden Außenbund 18 der Lagerwelle 7 ist eine Teilscheibe 1 befestigt, die in einen durch abgestufte Formgebung der Lagerflansche 6.1 bzw. 6.2 gebildeten Ringraum eingreift. Der Teilscheibe 1 ist eine am Lagerflansch 6.2 befestigte Abtasteinheit 15 zugeordnet, die eine Abtast- oder Strichplatte 2 aufweist, wobei auf der einen Seite der Abtastplatte 2 wenigstens eine Leuchtdiode 5 und auf der anderen Seite der Abtastplatte 2 wenigstens ein photoelektrischer Empfänger 4 angeordnet sind. Die Meßteilung der Teilscheibe 1 wird also in bezug auf das Strichmuster der Abtastplatte 2 im Durchlicht der Leuchtdiode 5 vom Empfänger 4 abgetastet. Die gesamte Abtasteinheit 15 ist damit im von den Lagerflanschen 6.1, 6.2 umschlossenen Raum angeordnet.

Wie sich aus Fig. 2 ersehen läßt, bildet die Leuchtdiode 5 einen Leuchtkegel 16, wodurch die Abtastung der Meßteilung der Teilscheibe 1 von Abstandsänderungen zwischen der Abtastplatte 2 und der Teilscheibe 1 abhängig ist. Durch die erfindungsgemäße Konstruktion des Stators aus zwei Lagerflanschen, die die gesamte Abtasteinheit umschließen, sind Abstandsänderungen schon weitgehend beseitigt. Um die Verhältnisse weiter zu verbessern, sind die Innenringe 11a der Wälzlager 11 gegenüber den Außenringen 11b axial verspannt, so daß das axiale Lagerspiel beseitigt wird. Zu diesem Zweck ist zwischen dem Innenring 11a des Wälzlagers 11 und einem Bund oder Wellenflansch 18 eine axial wirkende Schraubenfeder 9 eingesetzt, welche die Lagerwelle 7 koaxial umschließt.

Die Außenringe 11b der Wälzlager 11 sind mit den Lagerflanschen 6.1 bzw. 6.2, die zur Aufnahme dieser Außenringe vorzugsweise gleich große Bohrungen aufweisen, durch Klebung verbunden. Der Einbau der Wälzlager 11 erfolgt in der Weise, daß die Lagerwelle 7 in den Innenring 11a des im Lagerflansch 6.2 angeordneten Wälzlagers 11 eingeschoben und danach die Schraubenfeder 9 über die Lagerwelle 7 und sodann der Lagerflansch 6.1 auf die Lagerwelle 7 geschoben wird. Spätestens zu diesem Zeitpunkt wird Klebstoff, z. B. ein anaerob härtender Kleber, aufgebracht, um die Innenringe 11a der Wälzlager 11 mit der Welle 7 zu verkleben, wobei innerhalb der Abbinde- oder Aushärtzeit des Klebers die beiden Lagerflansche 6.1 und 6.2 miteinander verschraubt werden und dann den Stator 13 bilden.

Aufgrund der gegenseitigen Vorspannung der beiden Innenringe 11a der Wälzlager 11, die durch die Druckfeder 9 bedingt ist, nehmen die Innenringe 11a ihre auf größte Distanz gebrachte Stellung ein, in der ein axiales Spiel der Lager 11 ausgeschaltet ist, wobei der Kleber in dieser Stellung der Innenringe 11a aushärtet und damit die Stellung der Innenringe 11a fixiert.

Aufgrund der die Abtasteinheit umschließenden Konstruktion und des Spielausgleichs durch die axiale Verspannung der Wälzlager 11 werden Signalschwankungen bei der Abtastung der Teilscheibe 1 durch die Abtasteinheit 15 ausgeschlossen. Da die axiale Festlegung der Welle 7 über eine Vorspannung der Wälzlager 11 keinen Einfluß auf die Abtasteinheit 15 hat, kann die Abtasteinheit 15 im Prinzip beliebig ausgeführt sein. So läßt sich die Erfindung beispielsweise auf inkrementale Drehgeber ebenso anwenden wie auf absolut codierende und die Abtastung kann im Durchlicht- oder Reflexionsverfahren erfolgen.

**Ansprüche**

1. Drehgeber mit einem mit einem Gehäuse (12) verbundenen Stator (13), in den über zwei Wälzlager (11) eine Welle (7) gelagert ist, an der eine Teilscheibe (1) befestigt ist, welcher eine am Stator (13) fixierte elektrooptische Abtasteinheit (15) zugeordnet ist, **dadurch gekennzeichnet, daß**

- der Stator (13) durch zwei miteinander verbundene Lagerflansche (6.1, 6.2) gebildet ist, die so gestaltet sind, daß im verbundenen Zustand der Lagerflansche ein die Teilscheibe (1) aufnehmender Ringraum (19) frei bleibt, und daß

- der Außenring (11b) des einen Wälzlagers (11) am einen Lagerflansch (6.2) und der Außenring des anderen Wälzlagers am anderen Lagerflansch (6.1) fixiert ist.

2. Drehgeber nach Anspruch 1, **dadurch gekennzeichnet,** daß die Innenringe (11a) der Wälzlager (11) auf der Welle (7) durch Kleben fixiert sind.

3. Drehgeber nach Anspruch 1, **dadurch gekennzeichnet,** daß die Wälzlager (11) Schulterkugellager sind.

4. Drehgeber nach Anspruch 1, **dadurch gekennzeichnet,** daß die Lagerflansche (6.1, 6.2) miteinander zur Bildung des Stators (13) verschraubt sind.

5. Drehgeber nach Anspruch 4, **dadurch gekennzeichnet,** daß der durch die verschraubten Lagerflansche (6.1, 6.2) gebildete Stator (13) über eine Doppelmembrankupplung (8a, 8b) mit dem Gehäuse (12) verbunden ist.

6. Drehgeber nach Anspruch 1, **dadurch gekennzeichnet,** daß die Innenringe (11a) der Wälzlager (11) axial vorge spannt sind.

7. Drehgeber nach Anspruch 6, **dadurch gekennzeichnet,** daß zwischen den Innenringen (11a) der Wälzlager (11) ein druckelastisches Element (9) angeordnet ist.

8. Drehgeber nach Anspruch 1, **dadurch gekennzeichnet,** daß das oder die Sensorelement(e) (5) der elektrooptischen Abtasteinheit (15) und eine Abtastplatte (2) durch Aussparungen im einen Lagerflansch (6.2) und das oder die entsprechenden Empfängerelement(e) (4) durch Aussparungen im anderen Lagerflansch (6.1) aufgenommen und gehalten sind.

9. Drehgeber nach Anspruch 1, **dadurch gekennzeichnet,** daß die Außenringe (11b) der Wälzlager (11) in den entsprechenden Bohrungen der Lagerflansche (6.1, 6.2) durch Kleben fixiert sind.

FIG. 1

FIG. 2

LPPI-003-EP